# EUROPÄISCHE PATENTSCHRIFT

(11) **EP 0 918 337 B1**
(45) Veröffentlichungstag und Bekanntmachung des Hinweises auf die Patenterteilung: **07.08.2002**
(21) Anmeldenummer: 98121289.7
(22) Anmeldetag: 09.11.1998
(51) Int. Cl.: G21C 3/335, G21C 19/105

(54) **Adapter für einen verkürzten Brennstab eines Kernreaktor-Brennelements**
Adapter for a partial-length fuel rod of a nuclear reactor fuel assembly
Adaptateur pour un barreau de combustible à longueur partielle d'un assemblage de combustible

(30) Priorität: 21.11.1997 DE 19751688
(43) Veröffentlichungstag der Anmeldung: 26.05.1999
(73) Patentinhaber: Framatome ANP GmbH, 91050 Erlangen (DE)
(72) Erfinder: Ringleb, Günter Dipl.-Ing., 91341 Röttenbach (DE)
(74) Vertreter: Mörtel & Höfner

(56) Entgegenhaltungen:
- EP-A- 0 714 102
- US-A- 4 374 801
- US-A- 4 659 537
- US-A- 5 280 508
- US-A- 5 825 837

## Beschreibung

Die Erfindung betrifft einen Adapter zum leichteren Greifen eines Brennstabs eines Kernkraftreaktors, insbesondere eines verkürzten Brennstabs, der also im Verhältnis zu anderen Brennstäben desselben Brennelements eine geringere Länge aufweist.

Bei Kernkraftwerken mit Siedewasserreaktoren steigt die Temperatur des von unten nach oben durch ein Brennelement strömenden Moderators im oberen Bereich des Brennelements an. Hierdurch sinkt in diesem Bereich die Dichte des Moderators, was einerseits zu einer höheren Strömungsgeschwindigkeit mit erhöhtem Strömungswiderstand und andererseits zu einer geringeren Moderationsleistung führt. Um diesen unerwünschten Effekt auszugleichen, werden in neuen Brennelement-Typen eine gewisse Anzahl von Brennstäben eingesetzt, die gegenüber den anderen Brennstäben eine geringere Länge aufweisen. Diese kürzeren ("teillangen") Brennstäbe werden im Fuß des Brennelements verankert und enden merklich unterhalb des Brennelement-Kopfes.

Brennstäbe werden zu Überprüfungs- oder Austauschzwecken manchmal aus einem Brennelement herausgenommen. Das gilt auch für teillange Brennstäbe, deren Handhabung möglichst einfach sein soll.

In der Patentschrift US 5,280,508 ist ein Greifwerkzeug mit einer Tragstange beschrieben, die auf die Endkappe eines teillangen Brennstabs aufgesetzt wird und über ein Gewinde in einer praktisch gleichlangen Hülse geführt ist.

Wird die Hülse mittels eines am oberen Ende angebrachten Handrades auf der Tragstange nach unten geschraubt, so schiebt sich ihr unteres Ende über die Endkappe des teillangen Brennstabes und drückt eine Zunge, die seitlich an der Tragstange vorsteht, in ein entsprechendes Profil der Endkappe, die daher an der Tragstange verriegelt wird. Der Brennstab, dessen unteres Ende an der Bodenplatte verschraubt ist, kann dann mittels der Tragstange losgeschraubt und herausgezogen werden.

Dieses Werkzeug, das vom Personal verschraubt werden muß, ist unhandlich und kann nicht an das übliche Werkzeug, das zum Entfernen der normallangen Brennstäbe benötigt wird, angekuppelt werden.

Das Ziel der Erfindung ist einen Adapter für die teillangen Brennstäbe zu schaffen, der auf einfache Weise an die Endkappe angesetzt werden kann.

Erfindungsgemäß wird hierzu ein Adapter vorgeschlagen mit einem stabförmigen Teil, das als eine Verlängerung des Brennstabs auf das verjüngte Ende eines Brennstabs aufgesteckt wird und dann seitlich nicht über den Querschnitt des Brennstabs hinausragt, und einen am Hinterende des stabförmigen Teils angebrachten Handhabungsteil, das z.B. wie die Endkappe eines entsprechenden Brennstabs normaler Länge ausgebildet sein und wie dieser Brennstab ergriffen werden kann. Das Handhabungsteil kann aber auch ähnlich wie das Handhabungsteil eines Greifwerkzeugs ausgebildet sein, mit dem normale Brennstäbe ergriffen werden. Im Vorderende des stabförmigen Teils befindet sich eine Schließzange, die von einer Öffnung im Handhabungsteil aus derart betätigt werden kann, daß sie in geöffneter Stellung gestattet, das Ende des Brennstabs, das sich verjüngt und seitlich mit einem Profil ausgestattet ist, in axialer Richtung in das Vorderende des stabförmigen Teils und in die Schließzange einzuführen. In ihrer geschlossenen Stellung greift die Schließzange dagegen formschlüssig in das Profil am eingeführten Ende des Brennstabs ein.

Die Länge des Adapters ist so bemessen, daß sein oberes Ende, wenn er an einen teillangen Brennstab angekuppelt ist, mindestens die Position einnimmt, die das obere Ende eines normallangen Brennstabes einnehmen würde, oder noch darüber hinaus reicht. Es ist daher möglich, die Tandem-Anordnung aus dem teillangen Brennstab und dem Adapter mit den üblichen Handhabungswerkzeugen für Brennstäbe oder wie ein solches Handhabungswerkzeug zu handhaben. Da der radiale Durchmesser des Adapters höchstens im Bereich des Handhabungsteils größer ist als ein Brennstab, ist es möglich, den Adapter von oben in das Brennelement einzuschieben, ihn durch die entsprechenden freien Positionen der Abstandhalter zu führen und so auf einen teillangen Brennstab aufzusetzen. Die Tandem-Anordnung kann wie ein normal langer Brennstab in die Maschen eines Siedewasser-Brennelements eingeführt oder daraus entfernt werden.

Vorteilhaft ist die Schließzange als eine Spannzange ausgebildet, die durch eine Bewegung entgegen der Kraft einer Feder in die geöffnete Stellung gebracht wird, aber in der geschlossenen Stellung durch die Feder gehalten wird, solange auf den Adapter keine äußeren Kräfte einwirken.

Allgemein ist es vorteilhaft, wenn die Schließzange Schließglieder enthält, die in der geschlossenen Stellung verrastet sind und in das Profil am verjüngten Ende des Brennstabs eingreifen, in der geöffneten Stellung jedoch seitlich zur Längsachse des stabförmigen Teils beweglich sind.

In einer vorteilhaften Ausführungsform weist die Schließzange eine durch ein Betätigungsglied (z.B. eine Stange) axial verschiebbare, zangenartige Hülse auf, die zwei Schließbacken mit je einem Ausweichraum für Schließglieder aufweist. In der geöffneten Stellung ist jedes Schließglied in dem Ausweichraum (d.h. einer zur Längsachse des Adapters hin offenen Ausnehmung des Schließbackens) beweglich und läßt eine Bewegung des Brennstab-Endes zu. Wird die Hülse mit den Schließbacken jedoch verschoben, so werden die Schließglieder aus dem Ausweichraum hinaus und in das Profil des Brennstab-Endes hinein verschoben. Auf diese Weise können die Backen mit den Schließgliedern geöffnet und geschlossen werden, so daß die Schließzange im geschlossenen Zustand eine formschlüssige Verbindung mit der Endkappe eines teillangen Brennstabes herstellt.

Die Schließzange läßt sich einfach wahlweise in die geöffnete oder geschlossene Stellung bringen, wenn im stabförmigen Teil des Adapters ein Betätigungsglied axial beweglich geführt ist. Dabei kann vorteilhaft im Handhabungsteil eine Stange verschiebbar gelagert sein, die zu dem Betätigungsglied führt. Prinzipiell kann statt einer axial verschiebbaren Hülse, die als Zange ausgebildet ist und zwei Schließbacken aufweist, zwischen die das verjüngte Ende des Brennstabs einführbar ist, auch eine ähnliche Schließzange verwendet werden, die drehbeweglich im stabförmigen Teil gehalten ist, also z.B. in Ausweichräumen gelagerte Schließglieder enthält, die durch eine Drehung aus dem Ausweichraum hinaus in das Profil des Brennstab-Endes gedrückt werden. Vorteilhaft ist die Schließzange aber so ausgebildet, daß sie durch eine axiale Bewegung geschlossen wird, also ihre geschlossene Stellung in axialer Richtung versetzt ist gegenüber der geöffneten Stellung. Ist bei dieser Ausbildung die Schließzange durch die Kraft einer Rückstellfeder in der geschlossenen Stellung gehalten, so daß sie nur gegen die Kraft dieser Rückstellfeder in die geöffnete Stellung gebracht werden kann, so öffnet die Schließzange immer dann, wenn durch Druck auf das Handhabungsteil der Adapter auf das verjüngte Ende des Brennstabs geschoben wird und schließt automatisch, wenn die Feder entlastet und am Handhabungsteil des Adapters gezogen wird. Ein unbeabsichtigtes Öffnen der Schließzange ist dann ausgeschlossen, wenn der Brennstab mittels des Adapters aus dem Brennelement gezogen wird.

Die Verwendung des erfindungsgemäßen Adapters führt zu einem vorteilhaften Verfahren zum Einsetzen oder Herausnehmen von Brennstäben in einem Kernreaktor-Brennelement, das Brennstäbe unterschiedlicher Länge enthält. Dabei sind die kürzeren Brennstäbe des Brennelements mit Endkappen versehen, die sich nach außen verjüngen und ein seitliches Profil aufweisen. Bei dem Verfahren wird dann dieses verjüngte Ende eines kürzeren Brennstabs in einen erfindungsgemäßen Adapter mit geöffneter Stellung seiner Schließzange eingesetzt, die Schließzange des Adapters in die geschlossene Stellung gebracht und dann der Adapter mit dem eingesetzten Brennstab am Handhabungsteil des Adapters ergriffen.

Anhand von drei Figuren wird die Erfindung näher erläutert.
- FIG 1 und FIG 2: zeigen ein bevorzugtes Ausführungsbeispiel eines auf einen Brennstab aufgesetzten Adapters im geschlossenen bzw. geöffneten Zustand, wobei das Handhabungsteil einen Griff zum Manipulieren des Adapters enthält.
- FIG 3: zeigt das obere Ende eines Adapters mit einem Handhabungsteil, das wie die Endkappe eines Siedewasser-Brennstabs ausgebildet ist.

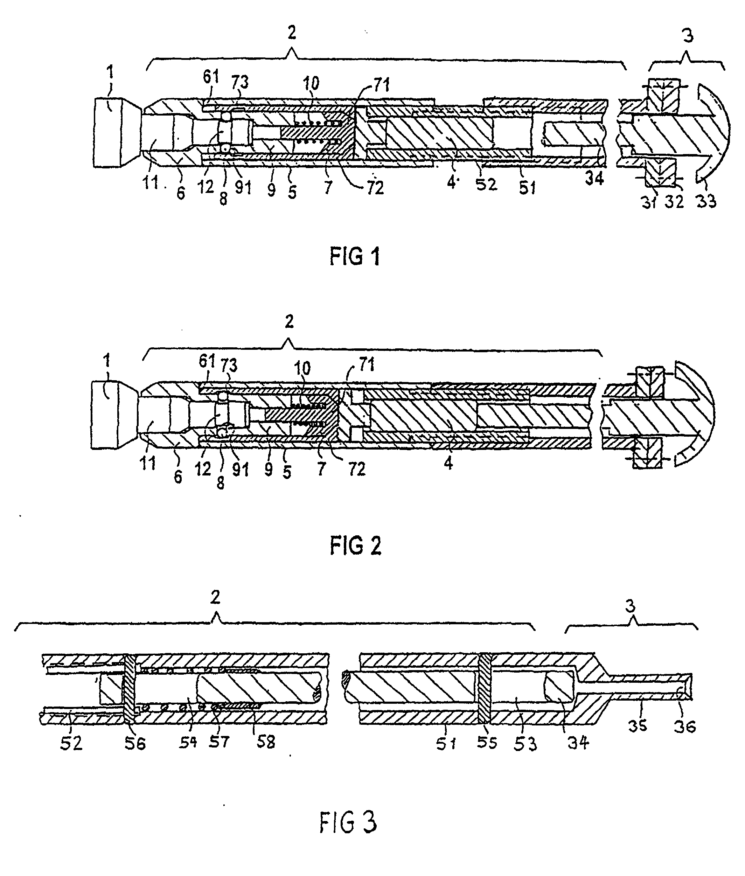

In Figur 1 ist die Endkappe eines Brennstabs 1 erkennbar, die ein verjüngtes Ende 11 besitzt, in das seitlich eine Ringnut 12 als Profil eingearbeitet ist. Dieses verjüngte Ende 11 des Brennstabs 1 ist in axialer Richtung bis zum Anschlag in das vordere Ende 6 eines Adapters eingeführt, der im wesentlichen aus dem stabförmigen Teil 2 besteht. Der stabförmige Teil 2 ist nur geringfügig dünner als der Brennstab 1, der dadurch auf die Länge eines normalen Brennstabs verlängert wird. Der verkürzte Brennstab und das stabförmige Teil kann also wie ein Brennstab normaler Länge gehandhabt werden, neben den er auf die übliche Weise durch die Maschen der Abstandhalter hindurch in das Brennelement eingesetzt werden soll.

Hierzu wird der den Brennstab tragende Adapter an einem Handhabungsteil 3 an seinem anderen Ende ergriffen. Der entsprechende Griff 33 bildet das Ende einer Betätigungsstange 34, die in einer Muffe 32 gelagert ist und im Inneren des stabförmigen Teils 2 zu einem in axialer Richtung beweglichen Betätigungsglied 4 führt. Die Muffe 32 ist durch eine Steckverbindung oder auf andere Weise an einem Flansch 31 gehalten, der an das Ende des stabförmigen Teils 2 angeformt ist. Flansch 31 und Muffe 32 bilden also eine lösbare Kupplung und wenn z.B. die Muffe 32 mit dem Griff 33 abgenommen ist, kann der Adapter nicht mehr vom Brennstab gelöst werden. Ein unbeabsichtigtes Lösen des Brennstabs ist dann nicht möglich.

In Figur 3 ist das Handhabungsteil am hinteren Ende des Adapters als ein hohler Zapfen ausgebildet, der die gleiche Außenkontur besitzt wie die Endstopfen der Brennstäbe normaler Länge, die in diesem Brennelement eingesetzt sind. In einem solchen Fall kann ein verkürzter Brennstab mit angesetztem Adapter wie ein gewöhnlicher Brennstab von einer Brennstab-Wechselmaschine gehandhabt werden. Auch in diesem Fall wird das erwähnte Betätigungsglied 4 durch die im stabförmigen Teil 2 axial beweglich gelagerte Betätigungsstange 34 betätigt, die in diesem Fall ganz im Inneren des Adapters angeordnet ist. Um die Betätigungsstange zu verschieben, weist der hohle Zapfen 35 eine Zugangsöffnung 36 für ein Stangenwerkzeug auf.

Vom Vorderende des Adapters bis zum Handhabungsteil erstreckt sich ein Außenrohr, das aus mehreren, miteinander verschraubten Rohrstücken 5, 51, 52 zusammengesetzt sein kann. Figur 3 zeigt, daß die Betätigungsstange 34, die mit ihrem einen Ende im Handhabungsteil 3 gelagert ist, in diesem Außenrohr geführt ist, wozu die Längsschlitze 53, 54 vorgesehen sind, in die entsprechende, am Außenrohr befestigte Führungsbolzen 55, 56 eingreifen. Dabei hält eine Rückstellfeder 57, die an einem an der Betätigungsstange 34 angeordneten Anschlag 58 angreift, die Betätigungsstange 34 in einer Ruhestellung, in der die Betätigungsstange 34 nicht am Betätigungsglied 4 anschlägt. Das Betätigungsglied 4 kann also nur entgegen der Kraft dieser Rückstellfeder 57 aus ihrer Ruhestellung heraus nach vorne geschoben werden.

Die Ruhestellung entspricht nach Figur 1 dem Zustand, in dem eine Schließzange 7 im Vorderende 6 des Adapters in das Profil 12 am verjüngten Ende des Brennstabs formschlüssig eingreift. Zwischen einem Anschlag 9 im Vorderende des Adapters und dieser Schließzange 7 ist eine weitere Rückstellfeder 10 eingespannt, die die Schließzange in der Ruhestellung hält.

Diese Schließzange 7 ist wie eine Hülse ausgebildet, die in einem entsprechenden Ringraum 61 des Vorderendes 6 und im Inneren des an das Vorderende anschließenden Rohrstücks 5 gelagert ist und entgegen der Kraft der Rückstellfeder 10 zum Vorderende hin in axialer Richtung beweglich ist. Die Hülse 7 (Schließzange) besteht in diesem Fall aus einem Basiskörper 71 und den beiden, das eingeführte, verjüngte Brennstab-Ende 11 seitlich umschließenden Schließbacken 72.

In der geschlossenen Stellung (Figur 1) der Schließzange drücken diese Schließbacken 72 beweglich im Außenrohr 5 gelagerte Schließglieder 8 in das Profil 12 des verjüngten Brennstab-Endes.

Diese Schließglieder 8 sind in diesem Fall zylindrisch ausgebildet und seitlich in entsprechenden Ausnehmungen 91 des Außenrohrs 5 geführt. Sie sind daher senkrecht zur Längsachse des Adapters beweglich, sobald ein entsprechender, in die Schließbacken 72 eingearbeiteter Ausweichraum 73, der zur Längsachse des Adapters hin offen ist, zugänglich wird. Dies geschieht, wenn die Schließzange 7 bzw. die Schließbacken 72 in die geöffnete Stellung geschoben werden, wie in Figur 2 gezeigt ist.

In dieser Stellung der Schließbacken 72 bzw. der Hülse 7 (Schließzange) sind dann die Schließglieder 8 beweglich und geben das eingeführte Ende des Brennstabs mit dem Profil 12 frei, sobald der Adapter vom Brennstab abgehoben wird.

In Figur 1 ist nicht erkennbar, daß das verjüngte Ende 11 des Brennstabs nicht vollkommen rotationssymmetrisch bezüglich der Brennstab-Längsachse ist, sondern auf der Seite, die dem Betrachter der Figur 1 abgewandt ist, eine ebene Angriffsfläche aufweist. Auch die entsprechende Öffnung, durch die das verjüngte Ende des Brennstabs in das Vorderende 6 des stabförmigen Teils 2 eingeführt wird, weist einen entsprechenden Querschnitt auf, also eine an der Angriffsfläche, ebene Anschlagfläche. Bezüglich einer Drehung um die Längsachse ist also das verjüngte Brennstab-Ende 11 formschlüssig mit dem Vorderende 6 des stabförmigen Teils 2 verbunden und kann durch Drehung des Adapters gedreht werden. In der Schließstellung ist daher der Adapter nicht nur über die in das Profil 12 eingreifenden Schließglieder 8 formschlüssig verbunden, sondern auch über die erwähnten, ebenen Flächen auch gegenüber einer relativen Drehbewegung von Stab und Adapter gesichert. Solange auf das Betätigungsglied 4 und Betätigungsstange 34 keine äußeren Kräfte einwirken, sitzt daher der Adapter fest auf dem Brennstab und durch eine schraubenförmige Bewegung des Adapters kann der Brennstab auch mit einem an seinem anderen Ende sitzenden Gewinde z.B. in eine Bodenplatte des Brennelements eingeschraubt oder ausgeschraubt werden.

## Patentansprüche

1. Adapter für ein verjüngtes, ein seitliches Profil (12) tragendes Ende (11) eines Kernreaktor-Brennstabs (1), mit einem stabförmigen Teil (2) und einem Handhabungsteil (3) am Hinterende des stabförmigen Teils, wobei eine Schließzange (7) in einem Vorderende des stabförmigen Teils (2) von einer Öffnung im Handhabungsteil (3) her derart betätigt werden kann, daß sie in einer geöffneten Stellung das verjüngte Ende (11) des Brennstabs (1) in axialer Richtung in das Vorderende (6) des stabförmigen Teils (2) und in die Schließzange (7) einzuführen gestattet und in einer geschlossenen Stellung formschlüssig in das Profil (12) des eingeführten Endes (11) des Brennstabs eingreift, und wobei ferner der stabförmige Teil (2) den Brennstab in axialer Richtung über das eingeführte Ende des Brennstabs hinaus verlängert, ohne seitlich über den Querschnitt des Brennstabs (1) hinauszuragen, und im stabförmigen Teil (2) ein Betätigungsglied (4) in axialer Richtung linear beweglich geführt ist, mit dem die Schließzange (7) wahlweise in die geöffnete und geschlossene Stellung gebracht wird.

2. Adapter nach Anspruch 1,
**dadurch gekennzeichnet, daß** im Handhabungsteil (3) eine Stange (34) verschiebbar gelagert ist, die zu dem Betätigungsglied (4) führt.

3. Adapter nach Anspruch 1 oder 2,
**dadurch gekennzeichnet, daß** die Schließzange (7) in der geöffneten Stellung in axialer Richtung versetzt ist gegenüber der geschlossenen Stellung.

4. Adapter nach Anspruch 3,
**dadurch gekennzeichnet, daß** die Schließzange (7) durch eine Rückstellfeder (10) in der geschlossenen Stellung gehalten ist und gegen die Kraft dieser Rückstellfeder (10) in die geöffnete Stellung verschiebbar ist.

5. Adapter nach einem der Ansprüche 1 bis 4, **dadurch gekennzeichnet, daß** die Schließzange (7) Schließglieder (8) trägt, die in der geschlossenen Stellung in das Profil (12) eingreifen und in der geöffneten Stellung seitlich zur Längsachse des stabförmigen Teils beweglich sind.

6. Adapter nach einem der Ansprüche 1 bis 5,
**dadurch gekennzeichnet, daß** die Schließzange (7) zwei Schließbacken (72) aufweist, die durch Verschieben wahlweise in die geöffnete Stellung oder die geschlossene Stellung gebracht werden, wobei das verjüngte Ende des Brennstabs zwischen die Schließbacken einführbar ist und jeder Schließbacken (72) ein Schließglied (8) trägt, das in der geöffneten Stellung in einer zur Längsachse des stabförmigen Teils hin offenen Ausnehmung (91) des Schließbackens beweglich ist und in der geschlossenen Stellung in das Profil (12) hineingedrückt wird.

7. Adapter nach einem der Ansprüche 1 bis 6, **dadurch gekennzeichnet, daß** die Schließzange (7) durch mindestens eine Feder (10) in der geschlossenen Stellung gehalten ist und entgegen der Kraft der Feder in die geöffnete Stellung gebracht wird.

8. Adapter nach einem der Ansprüche 1 bis 7,
**dadurch gekennzeichnet, daß** ein Außenrohr (5, 51, 52) vom Handhabungsteil (3) bis zum Vorderende (6) des stabförmigen Teils (2) führt, das eine dem Querschnitt des verjüngten Endes (11) des Brennstabs (1) entsprechende Öffnung aufweist und in dem die Schließzange (7) sowie ein Betätigungsglied (4) mit einer Betätigungsstange (34) in axialer Richtung beweglich gelagert und geführt sind.

9. Verfahren zum Einsetzen oder Herausnehmen von Brennstäben in einem Kernreaktor-Brennelement, das Brennstäbe unterschiedlicher Länge enthält, wobei das verjüngte Ende eines kürzeren Brennstabs in einen Adapter nach einem der Ansprüche 1 bis 8 bei geöffneter Stellung der Schließzange (7) des Adapters eingeführt, die Schließzange in die geschlossene Stellung gebracht und der Adapter am Handhabungsteil ergriffen wird.

## Claims

1. Adapter for a tapered end (11) of a nuclear reactor fuel rod (1), which end carries a side profile (12), having a rod-shaped part (2) and a handling part (3) at the rear end of the rod-shaped part, it being possible to actuate a clamping chuck (7) in a front end of the rod-shaped part (2) from an opening in the handling part (3) in such a way that, in an open position; it permits the tapered end (11) of the fuel rod (1) to be introduced in the axial direction into the front end (6) of the rod-shaped part (2) and into the clamping chuck (7) and, in a closed position, engages positively in the profile (12) of the introduced end (11) of the fuel rod, and the rod-shaped part (2), furthermore, lengthening the fuel rod in the axial direction beyond the introduced end of the fuel rod without protruding laterally beyond the cross section of the fuel rod (1), and an actuation element (4) being movably guided linearly in the axial direction in the rod-shaped part (2), by means of which actuation element (4) the clamping chuck (7) is optionally brought into the open and closed position.

2. Adapter according to Claim 1, **characterized in that** a bar (34), which leads to the actuation element (4), is displaceably supported in the handling part (3).

3. Adapter according to Claim 1 or 2, **characterized in that**, in the open position, the clamping chuck (7) is offset in the axial direction relative to the closed position.

4. Adapter according to Claim 3, **characterized in that** the clamping chuck (7) is held in the closed position by a return spring (10) and can be displaced into the open position against the force of this return spring (10).

5. Adapter according to one of Claims 1 to 4, **characterized in that** the clamping chuck (7) carries clamping elements (8) which, in the closed position, engage in the profile (12) and, in the open position, can be moved laterally relative to the longitudinal axis of the rod-shaped part.

6. Adapter according to one of Claims 1 to 5, **characterized in that** the clamping chuck (7) has two clamping jaws (72) which, by displacement, are optionally brought into the open position or the closed position, it being possible to introduce the tapered end of the fuel rod between the clamping jaws and each clamping jaw (72) carrying a clamping element (8) which, in the open position, can be moved in a recess (91) of the clamping jaw open towards the longitudinal axis of the rod-shaped part and, in the closed position, is pressed into the profile (12).

7. Adapter according to one of Claims 1 to 6, **characterized in that** the clamping chuck (7) is held in the closed position by at least one spring (10) and is brought into the open position against the force of the spring.

8. Adapter according to one of Claims 1 to 7, **characterized in that** an outer tube (5, 51, 52) of the handling part (3) leads as far as the front end (6) of the rod-shaped part (2), which has an opening corresponding to the cross section of the tapered end (11) of the fuel rod (1) and in which the clamping chuck (7) and an actuation element (4) with an actuating bar (34) are movably supported and guided in the axial direction.

9. Method of inserting or removing fuel rods in a nuclear reactor fuel element which contains fuel rods of different lengths, the tapered end of a shorter fuel rod being introduced into an adapter, according to one of Claims 1 to 8, in the open position of the clamping chuck (7) of the adapter, the clamping chuck being brought into the closed position and the adapter being grasped at the handling part.

## Revendications

1. Adaptateur pour une extrémité (11), rétrécie et portant un profilé (12) latéral, d'un crayon (1) combustible de réacteur nucléaire, comprenant une partie (2) en forme de barreau et une partie (13) de manipulation à l'extrémité arrière de la partie en forme de barreau, une pince (7) de fermeture dans une extrémité avant de la partie (2) en forme de barreau, pouvant être actionnée à partir d'une ouverture dans la partie (3) de manipulation, de manière à autoriser, dans une position ouverte, le guidage de l'extrémité (11) rétrécie du crayon (1) combustible en direction axiale dans l'extrémité (6) avant de la partie (2) en forme de barreau et dans la pince (7) de fermeture et à pénétrer, en une position fermée, par complémentarité de forme dans le profilé (12) de l'extrémité (11) guidée du crayon combustible, la partie (2) en forme de barreau prolongeant le crayon combustible en direction axiale au-delà de l'extrémité guidée du crayon combustible, sans faire saillie latéralement au-delà de la section transversale du crayon (1) combustible, et il est guidé mobile linéairement dans la direction axiale, dans la partie (2) en forme de barreau, un élément (4) d'actionnement, par lequel la pince (7) de fermeture peut être mise au choix en la position ouverte et en la position fermée.

2. Adaptateur suivant la revendication 1, **caractérisé en ce qu'**il est monté coulissant, dans la partie (3) de manipulation, une barre (34) qui va à l'élément (4) d'actionnement.

3. Adaptateur suivant la revendication 1 ou 2, **caractérisé en ce que** la pince (7) de fermeture est, en la position ouverte, décalée en direction axiale par rapport à la position fermée.

4. Adaptateur suivant la revendication 3, **caractérisé en ce que** la pince (7) de fermeture est maintenue par un ressort (10) de rappel en la position fermée et peut coulisser pour venir en ladite position ouverte à l'encontre de la force de ce ressort (10) de rappel.

5. Adaptateur suivant l'une des revendications 1 à 4, **caractérisé en ce que** la pince (7) de fermeture porte des éléments (8) de fermeture, qui en la position fermée pénètrent dans le profilé (12) et qui en la position ouverte sont mobiles latéralement par rapport à l'axe longitudinal de la partie en forme de barreau.

6. Adaptateur suivant l'une des revendications 1 à 5, **caractérisé en ce que** la pince (7) de fermeture a deux mâchoires (7) de fermeture, qui sont mises par déplacement au choix en la position ouverte ou en la position fermée, l'extrémité rétrécie du crayon combustible pouvant être insérée entre les mâchoires de fermeture, et chaque mâchoire (72) de fermeture portant un élément (8) de fermeture qui est mobile en la position ouverte dans un évidement (91) de la mâchoire de fermeture qui débouche vers l'axe longitudinal de la partie en forme de barreau et qui est repoussé dans le profilé (12) en la position fermée.

7. Adaptateur suivant l'une des revendications 1 à 6, **caractérisé en ce que** la pince (7) de fermeture est maintenue en la position fermée par au moins un ressort (10) et est mise en la position ouverte à l'encontre de la force des ressorts.

8. Adaptateur suivant l'une des revendications 1 à 7, **caractérisé en ce qu'**un tube (5, 51, 52) extérieur va de la partie (3) de manipulation à l'extrémité (6) avant de la partie (2) en forme de barreau, tube qui a une ouverture correspondant à la section transversale de l'extrémité (11) rétrécie du crayon (1) combustible, et dans lequel la pince (7) de fermeture, ainsi qu'un élément (4) d'actionnement ayant une tringle (34) d'actionnement, sont montés mobiles et guidés en direction axiale.

9. Procédé pour mettre ou enlever des crayons combustibles d'un assemblage combustible de réacteur nucléaire, qui contient des crayons combustibles de longueurs différentes, l'extrémité rétrécie d'un crayon combustible de longueur partielle étant guidée dans un adaptateur suivant l'une des revendications 1 à 8, en la position ouverte de la pince (7) de fermeture de l'adaptateur, la pince de fermeture étant mise en la position fermée et agrippant l'adaptateur sur la partie de manipulation.
